# EUROPEAN PATENT APPLICATION

(11) **EP 2 110 966 A1**
(43) Date of publication of application: **21.10.2009**
(21) Application number: 08154692.1
(22) Date of filing: 17.04.2008
(51) Int. Cl.: H04B 7/155, H01Q 1/22, H01Q 21/28

(54) **Circular polarized repeater and transmission method thereof**

(71) Applicant: Inpaq Technology Co., Ltd., Hsinchu (TW)
(72) Inventor: Ceng, Ta-Fu, 404, TAICHUNG CITY (TW); Huang, Yueh-Pi, 350, JHUNAN TOWNSHIP (TW); Su, Hao-Chang, 826, ZIHGUAN TOWNSHIP (TW)
(74) Representative: Viering, Jentschura & Partner

(57) **Abstract**

A circular polarized repeater includes a circular polarized receiving antenna for receiving a circular polarized signal, an amplifying circuit electrically connected to the circular polarized receiving antenna which is provided for amplifying the received signal, a circular polarized emitting antenna connected to the amplifying circuit for outputting the amplified signal. The circular polarized repeater is used for a transmission system and the signal is received and then outputted to a predetermined area by the circular polarized repeater so as to improve the quality and efficiency of the system.

## Description

### BACKGROUND OF THE INVENTION

### 1. Field of the Invention

The present invention relates to a circular polarized repeater and a transmission method thereof, and in particular to a repeater and a transmission method for improving the quality of the signal.

### 2. Description of Prior Art

Antenna is a basic unit in the wireless communication system and has the function of transmitting and receiving wireless signals. In the 21st century, the structure of antennae is changing a lot and now the planar antenna is widely used in many wireless products. Regardless of the structure of antennae, they play an important role for signal transmission.

The Global Positioning System (GPS) can be implemented in personal positioning devices. The end device usually has a GPS receiver so that the signal is processed in the device. GPS is utilizing a constellation of at least 24 Medium Earth Orbit satellites that transmit precise microwave signals. The system enables a GPS receiver to determine its location, speed, direction, and time. Because the satellite signals are radio signals, the antenna is a key element of GPS applications.

However, the satellite communication is limited by the environment. For example, the signal can be blocked by buildings in a city. Narrow streets or the reflection from windows will have an effect on signal transmission. Indoor areas usually become "dead spots" and users can not receive a GPS signal at those locations. Traditionally, a wire connection is used for transmitting the signal into buildings. However, the signal quality is not optimized in these cases, and users do not have a sufficiently good signal for data processing indoors.

Therefore, in view of this, the inventor proposes the present invention to overcome the above problems based on his expert experience and deliberate research.

### SUMMARY OF THE INVENTION

The primary object of the present invention is provided for a circular polarized repeater and a transmission method thereof. The circular polarized repeater can receive and amplify a signal, and then the amplified signal is transmitted to an area of low signal strength so as to improve the transmission quality.

In order to achieve the above objects, the present invention provides a circular polarized repeater. The circular polarized repeater comprises a circular polarized receiving antenna for receiving a circular polarized signal; an amplifying circuit coupled to the circular polarized receiving antenna for amplifying the circular polarized signal; and a circular polarized emitting antenna coupled to amplifying circuit for emitting the amplified circular polarized signal.

The present invention further provides a transmission method for using the circular polarized repeater. The transmission method includes the following steps. Step 1 is disposing the circular polarized repeater at a predetermined position of an enclosed space. Step 2 is receiving a signal form an output unit via the circular polarized repeater and sending the signal to a receiving unit inside the enclosed space.

Depending on the present invention, the wireless signal can be amplified and then send to a position with low signal strength so as to solve the problems of "dead spots".

In order to better understand the characteristics and technical contents of the present invention, a detailed description thereof will be made with reference to the accompanying drawings. However, it should be understood that the drawings and the description are illustrative but not used to limit the scope of the present invention.

### BRIEF DESCRIPTION OF THE DRAWINGS

Fig. 1 is a schematic view showing the circular polarized repeater according to the present invention.
Fig. 2 is a schematic view showing the first embodiment of the transmission method according to the present invention.
Fig. 3 is a schematic view showing the second embodiment of the transmission method according to the present invention.
Fig. 4 and Fig. 4A show experimental data of the circular polarized repeater according to the present invention.

### DETAILED DESCRIPTION OF THE INVENTION

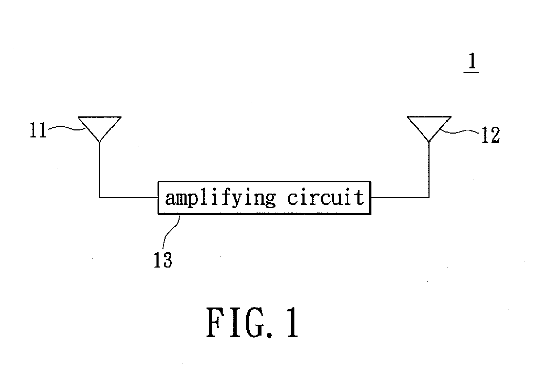

Please refer to Fig. 1, the invention discloses a circular polarized repeater 1 and a transmission method using the circular polarized repeater 1. The circular polarized repeater 1 is used for receiving a signal and amplifying the signal so that the amplified signal can be outputted by the circular polarized repeater 1 to a predetermined position. The circular polarized repeater 1 includes a circular polarized receiving antenna 11 for receiving a circular polarized signal; an amplifying circuit 13 coupled to the circular polarized receiving antenna 11 for amplifying the circular polarized signal; and a circular polarized emitting antenna 12 coupled to amplifying circuit 13 for emitting the amplified circular polarized signal.

General speaking, circular polarized signal is used for solving "Fading" that is due to multi-path propagation. Fading refers to the distortion that a carrier-modulated telecommunication signal experiences over certain propagation media and results in loss of signal in telecommunications. When transmitting or receiving circular polarized signal, a limited polarized direction in not necessary so that the circular polarized signal is suitable for satellite communication. Most of wireless systems, such as GPS (global positioning system), SDARS (Satellite Digital Audio Radio service), DAB (Digital Audio Broadcasting) use circular polarized antenna for transmitting or receiving the signal. Furthermore, circular polarized communication can minimize the signal loss resulted from polarized and the signal decay of multi-path so that the circular polarized signal is widely used in satellite transmission and usage of searching radar. The present invention is disclosed to use the repeater in the circular polarized signal transmission so as to improve the transmission quality.

The circular polarized receiving antenna 11 of the circular polarized repeater 1 is used for receiving the circular polarized signal, such as a GPS signal or a SDARS signal, but not restricted to the above-mentioned signals. Regarding GPS, the GPS must continuously receive the positioning signal from the GPS satellite, therefore the antenna of the GPS device plays the most important role in order to receive the signal of 1.226 GHz and 1.575 GHz. On the other hand, the antenna of the GPS device can be right-hand circular polarized (RHCP) to transmit and receive the GPS signal. For example, the right-hand circular polarized (RHCP) antenna preferably cooperates with the right-hand circular polarized (RHCP) GPS signal so as to calculate position of the GPS device.

The signal is received by the circular polarized receiving antenna 11 and the polarized signal can be transferred or/and amplified by the amplifying circuit 13. The amplifying circuit 13 is used for amplifying signal, reducing noise, power consumption, interference of multi-path and shaving, and improving the sensitivity. The amplifying circuit 13, for example, is a low-noise amplifier (LNA) or a combination of a low-noise amplifier (LNA) and a power amplifier (PA). The low-noise amplifier (LNA) can increase gain and sensitivity of the signal received by the circular polarized receiving antenna 11. The amplifying circuit 13 has to meet the following characteristics: stability, noise figure, gain and voltage standing wave ratio and the amplifying circuit 13 has an effect of the receiving system.

The amplified signal can be transmitted to a predetermined direction by the circular polarized emitting antenna 12 so that the signal can be transmitted to an area with low signal strength in order to increase the signal strength and the transmission efficiency.

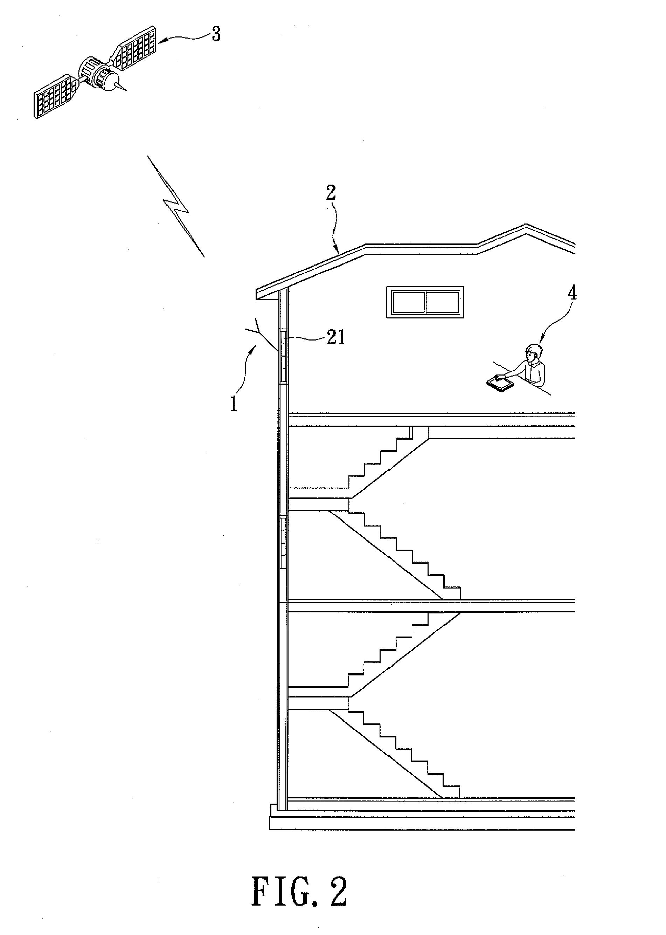

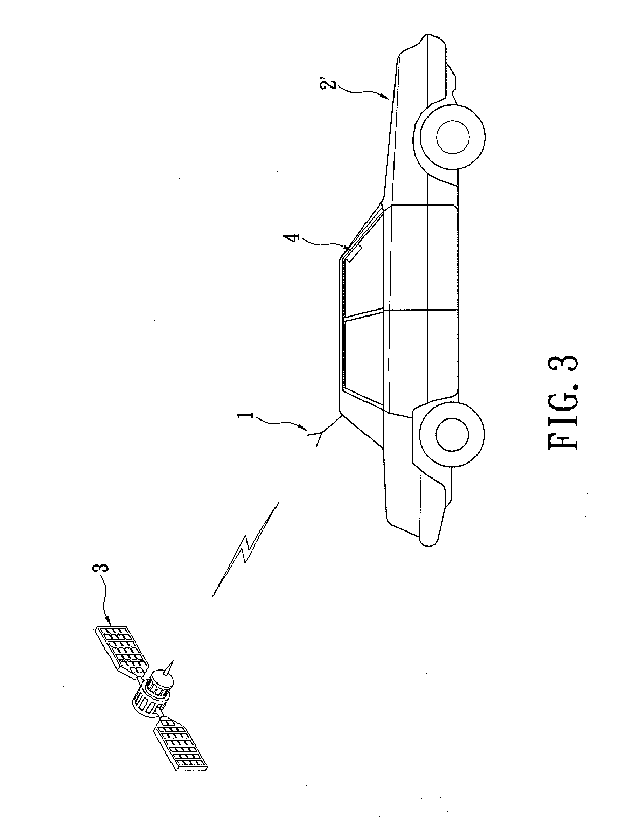

Please refer to Figs. 2 and 3, the circular polarized repeater 1 is applied for indoor or in-car transmission that it is difficult for the signal transmitting to.

The enclosed space 2 can be a building or a car and the enclosed space 2 has "dead spots" that the signal hardly reaches. In the city, the buildings will become a transmission barrier to interfere the GPS signal and the GPS device can not receive the positioning signal. Similarly, GPS device is widely used in the car. However, the composition of window film (sun control film) includes metal materials which take effects of the transmission signal. In other words, the metallic-included film interferes the wireless signal, such as mobile phone signal or GPS signal. The circular polarized repeater 1 is used for the situation that the signal is interfered and has low signal strength.

Fig. 2 shows the first embodiment using the circular polarized repeater 1. The circular polarized repeater 1 is setup on a building. The circular polarized repeater 1 is preferably disposed at a window 21 of the building. The circular polarized receiving antenna 11 of the circular polarized repeater 1 is preferably toward the outside of the building so as to efficiently receive the signal outputted from the output unit 3, for example a satellite. Then the signal is amplified by the amplifying circuit 13 and outputted to the area with low signal strength by the circular polarized emitting antenna 12 so that the receiving unit 4 can receive the signal for processing wireless system. Furthermore, there can be many circular polarized repeaters 1 in a building so that the signal can be transmitted and received in multi-layer communication and the circular polarized repeater 1 can be used in more application.

Please refer to Fig. 3, the second embodiment is disclosed. The circular polarized repeaters 1 is used for a car 2'. The circular polarized repeater 1 is disposed on the top of the car 2'. The circular polarized receiving antenna 11 of the circular polarized repeater 1 is preferably toward the outside of the car 2' so as to efficiently receive the signal outputted from the output unit 3, for example a satellite. Then the signal is amplified by the amplifying circuit 13 and outputted to the in-car area by the circular polarized emitting antenna 12 so that the receiving unit 4, such as GPS device, can receive the signal for processing the wireless communication.

For reducing the interference, the circular polarized receiving antenna 11 and the circular polarized emitting antenna 12 preferably have different circular polarized direction. In other words, the circular polarized receiving antenna 11 can have a first polarized direction and the circular polarized emitting antenna 12 has a second polarized direction. For example, the circular polarized receiving antenna 11 is left-hand circular polarized (LHCP) and the circular polarized emitting antenna 12 is right-hand circular polarized (RHCP) so as to reduce the interference between the in and out signals. Moreover, there is a predetermined length between the circular polarized receiving antenna 11 and the circular polarized emitting antenna 12 so that the interference can be reduced. On the other hand, the circular polarized receiving antenna 11, the circular polarized emitting antenna 12 and the amplifying circuit 13 can be assembled as a module so as to increase the convenience of using.

As above mentioned, the transmission method using the circular polarized repeater 1 is disclosed as follows:
Step 1: disposing the circular polarized repeater 1 at a predetermined position of an enclosed space 2; and
Step 2: receiving a signal form an output unit 3 via the circular polarized repeater 1 and sending the signal to a receiving unit 4 inside the enclosed space 2.

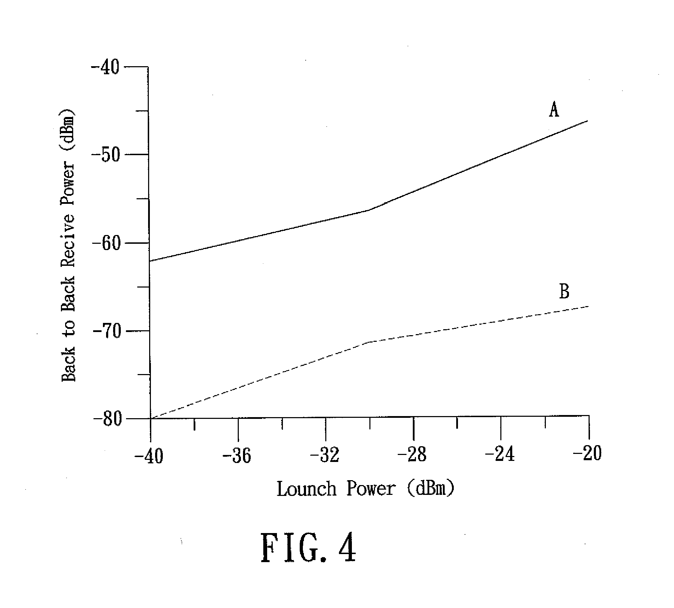

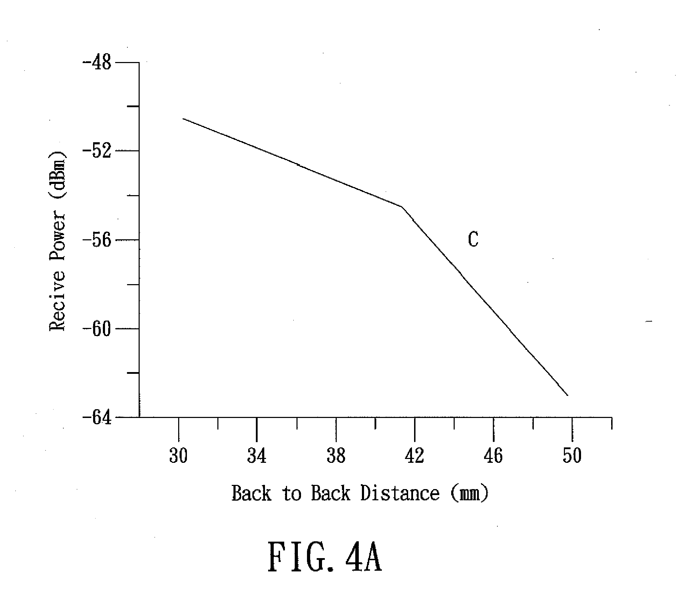

Please refer to Figs. 4 and 4A, the drawings show the experiment data of the circular polarized repeater 1. In Fig. 4, line A shows the data about left-hand circular polarized (LHCP) receiving antenna and the left-hand circular polarized (LHCP) emitting antenna. Line B shows the data about is right-hand circular polarized (RHCP) receiving antenna and the left-hand circular polarized (LHCP) emitting antenna. The line B presents an improvement for the interference. On the other hand, Line C in Fig, 4A shows that the distance between the right-hand circular polarized (RHCP) receiving antenna and the left-hand circular polarized (LHCP) emitting antenna takes influence to the interference.

To sum up, the present invention has the following advantages:
1. The circular polarized repeater 1 can be used for amplifying the signal and transmitting the amplified signal to an area with low signal strength in order to increase the transmission quality and efficiency.
2. The gain of the circular polarized repeater 1 can be adjusted by changing the positions of the above two antennae and the antennae can be assembled with the amplifying circuit as an antenna module.

Although the present invention has been described with reference to the foregoing preferred embodiment, it will be understood that the invention is not limited to the details thereof. Various equivalent variations and modifications may occur to those skilled in this art in view of the teachings of the present invention. Thus, all such variations and equivalent modifications are also embraced within the scope of the invention as defined in the appended claims.

## Claims

1. A circular polarized repeater, comprising:
a circular polarized receiving antenna for receiving a circular polarized signal;
an amplifying circuit coupled to the circular polarized receiving antenna for amplifying the circular polarized signal; and
a circular polarized emitting antenna coupled to the amplifying circuit for emitting the amplified circular polarized signal.

2. The circular polarized repeater according to claim 1, wherein the amplifying circuit is a low-noise amplifier (LNA).

3. The circular polarized repeater according to claim 1, wherein the amplifying circuit comprises a low-noise amplifier (LNA) and a power amplifier (PA).

4. The circular polarized repeater according to claim 1, wherein the circular polarized receiving antenna has a first polarized direction and the circular polarized emitting antenna has a second polarized direction.

5. The circular polarized repeater according to claim 4, wherein the circular polarized receiving antenna is left-hand circular polarized (LHCP) and the circular polarized emitting antenna is right-hand circular polarized (RHCP).

6. The circular polarized repeater according to claim 1, wherein the circular polarized receiving antenna has a predetermined distance from the circular polarized emitting antenna.

7. A transmission method using the circular polarized repeater according to claim 1, comprising:
disposing the circular polarized repeater at a predetermined position inside an enclosed space; and
receiving a signal from an output unit via the circular polarized repeater and sending the signal to a receiving unit inside the enclosed space.

8. The transmission method according to claim 7, wherein the enclosed space is a building or a car.

9. The transmission method according to claim 7, wherein the output unit is a satellite and the signal is a global positioning system (GPS) signal.

10. The transmission method according to claim 7, wherein the circular polarized receiving antenna of the circular polarized repeater is used for receiving the signal.

11. The transmission method according to claim 10, wherein the amplifying circuit is used for amplifying the signal and the amplified signal is transmitted to the receiving unit by the circular polarized emitting antenna of the circular polarized repeater.

12. The transmission method according to claim 7, wherein the circular polarized receiving antenna has a first polarized direction and the circular polarized emitting antenna has a second polarized direction.

13. The transmission method according to claim 12, wherein the circular polarized receiving antenna is left-hand circular polarized (LHCP) and the circular polarized emitting antenna is right-hand circular polarized (RHCP).
